Europäisches Patentamt

**European Patent Office**

**Office européen des brevets**

(11) Numéro de publication: **0 170 541**
**B1**

(12) **FASCICULE DE BREVET EUROPÉEN**

(45) Date de publication du fascicule du brevet:
**27.04.88**

(51) Int. Cl.⁴: **C 09 D 5/10,** C 08 K 9/02

(21) Numéro de dépôt: **85401102.0**

(22) Date de dépôt: **04.06.85**

(54) **Composition pigmentaire destinée à la protection cathodique de surfaces métalliques contre la corrosion, ainsi que son procédé de préparation.**

(30) Priorité: **05.06.84 FR 8408781**

(43) Date de publication de la demande:
**05.02.86 Bulletin 86/6**

(45) Mention de la délivrance du brevet:
**27.04.88 Bulletin 88/17**

(84) Etats contractants désignés:
**BE DE GB NL**

(56) Documents cité:
**DE-A-2 460 546**
**FR-A-2 014 936**

(73) Titulaire: **Barre, Maurice, 41 avenue de Chartres, F-28570 Abondant (FR)**
Titulaire: **Kalewicz, Zdzislaw, 45 rue Perronet, F-92200 Neuilly- sur- Seine (FR)**

(72) Inventeur: **Barre, Maurice, 41 avenue de Chartres, F-28570 Abondant (FR)**
Inventeur: **Kalewicz, Zdzislaw, 45 rue Perronet, F-92200 Neuilly- sur- Seine (FR)**

(74) Mandataire: **Bonnetat, Christian, Cabinet PROPI Conseils 23 rue de Léningrad, F-75008 Paris (FR)**

# 0 170 541

## Description

La présente invention concerne particulièrement une composition pigmentaire à base de zine destinée à la protection cathodique de surfaces métalliques contre la corrosion, ainsi que le procédé en vue de sa préparation.

On connait déjà des produits conprenant un liant et une composition pigmentaire à base d'un métal plus anodique que le métal à protéger, tel que le zinc, mélangé à un matériau réfractaire de substitution tel qu'un alliage métallique, et notamment un sel combiné du fer.

On sait que l'adjonction dans la composition pigmentaire dudit matériau de substitution a pour but de diminuer la quantité de métal anodique, généralement du zinc, entrant dans la composition de la composition pigmentaire, tout en conservant les propriétés anticorrosion de la composition.

Ceci est un avantage certain, compte-tenu du prix relativement élevé du zinc, sous forme de poudre de zinc, par rapport aux matériaux de substitution qui sont souvent des sous-produits peu onéreux.

Le brevet français n° 2 014 936, par exemple, décrit une telle composition dans laquelle la composition pigmentaire est constituée de poudre de zinc mélangée à de la poudre de phosphure de fer finement broyée et constituant une charge mélangée au zinc.

Cependant, le pourcentage pondéral du matériau de substitution (phosphure de fer) par rapport à la composition totale, ne peut excéder, dans cette formulation connue, une valeur limite, de l'ordre de 25 à 35 %, sous peine de diminuer, voire d'annuler, les propriétés anticorrosion de la composition.

Le remplacement du zinc par le phosphure de fer reste donc limité par des imperatifs d'efficacité et ne procure qu'un avantage relatif sur le plan économique.

Il est apparu intéressant de chercher à augmenter ce pourcentage limite representant le plafond de la quantité relative du matériau de substitution, incorporé à côté et en remplacement du zinc dans la composition pigmentaire.

En outre, les procédés connus, tels que celui décrit dans le brevet mentionne precedemment, restent relativement onéreux dans leur mise en oeuvre puisqu'ils nécessitent des opérations de broyage et de tamisage pour chacun des constituants de la composition qui doivent être menées dans des conditions de grande précision, compte-tenu des exigences relatives aux tailles possibles des particules utilisables, de l'ordre de 5 à 20 μm.

Par exemple, la poudre de zinc constituée de particules de plus de 20 μ ou 30 μm nécessite toujours, de manière connue, un broyage préliminaire onéreux, qui alourdit le prix de revient de la composition finale.

En conséquence, certaines poudres de zinc constituées de particules de relative grande taille (200 μm) et disponibles à des prix relativement bas, restent ainsi inutilisables.

En particulier, la présente invention remédie à ces inconvénients et concerne un procéde pour réaliser de manière économique une composition anticorrosion ne contenant qu'une faible quantité relative de zinc, donc peu onéreuse, et présentant des propriétés de protection contre la corrosion identiques et mêmes supérieures à celles des compositions connues.

A cette fin l'invention concerne une composition pigmentaire pulvérulente destinée à la protection cathodique de surface métallique contre la corrosion, et susceprible d'être appliquée sur ladite surface notamment après incorporation dans un liant, ladite composition étant à base d'une part d'un métal plus anodique que le métal à protéger, tel que le zinc, et, d'autre part d'un matériau de substitution, caractérisée en ce qu'elle est constituée de particules formées d'un noyau dudit matériau de substitution choisi parmi les composés conducteurs électriquement tels que les carbures, phosphures, nitrures, borures, siliciures, d'un métal tel que le fer, cobalt, nickel, molybdene, titane, chrome, zirconium, vanadium, tungstène, thorium, tantale, cadmium, et en ce que le noyau est revêtu d'une couche d'enrobage constituée du métal anodique.

De préférence le matériau de substitution formant le noyau des particules est du phosphure de fer et le métal anodique est du zinc.

Facultativement la composition pigmentaire comporte également des additifs constitués de particules de métaux auxiliaires tels que le manganèse, le chrome ou l'aluminium.

L'invention concerne également un procédé pour la préparation d'une composition pigmentaire telle que précisée ci-dessus et ce procédé est caractérisé en ce que l'on prépare le matériau de substitution sous forme de particules de granulométrie comprise entre et 200 μm et que l'on provoque, par tous moyens tels que broyage mécanique, revêtement chimique ou électro-déposition, le dépôt d'une couche du métal anodique sur la surface desdites particules du matériau de substitution formant ainsi les particules enrobées constituant la composition pigmentaire.

Le traitement en vue du processus de revêtement du métal anodique sur les noyaux constitués par les particules du matériau de substitution est de préférence prolongé jusqu'à ce que l'on obtienne une épaisseur de l'enrobage en métal anodique permettant la création d'une zone intermédiaire de diffusion des ions entre le noyau constitué de métal de substitution et la couche extérieure d'enrobage du métal anodique.

Selon une forme de réalisation avantageuse, on mélange des particules de matériau de substitution d'une part et des particules de métal anodique d'autre part, la dureté du matériau de substitution étant supérieure à celle du métal anodique puis l'on soumet le mélange à un broyage mécanique de manière à réaliser un dépôt d'une couche du métal anodique à la surface des particules du matériau de substitution.

Avantageusement, la quantité en poids de métal anodique par rapport au mélange total est comprise entre 3 et 90 % et de préférence entre 10 et 30 %.

2

# 0 170 541

L'invention concerne enfin un produit à l'état liquide ou pâteux et destiné à constituer un revêtement de protection contre la corrosion, caractérisé en ce qu'il comporte dans un liant une composition pigmentaire telle que définie ci-dessus introduite dans une proportion comprise entre 10 et 95 % du liant (indépendamment de la présence de diluants volatiles éventuels), et adjonction éventuelle de particules de matériaux inhibiteurs de corrosion tels que chromates, phosphates, molybdates, tungstates.

Ainsi, selon l'invention on obtient une composition bon marche puisqu'elle est formée en majeure partie d'un matériau de substitution moins onéreux que le métal anodique.

De plus, l'efficacité de la composition selon l'invention est égale et même supérieure, pour une quantité de zinc moindre, à celle des compositions connues riches en poudre de zinc.

En effet, le noyau se comporte cathodiquement par rapport à l'enrobage de zinc, qui lui-même joue le rôle d'anode soluble par rapport au métal à protéger.

Le zinc protège donc électriquement le métal, sur lequel est appliqué une couche de la composition selon l'invention, par son rôle d'anode soluble, source d'électrons par rapport audit métal.

Parallèlement, la zone de diffusion entre le noyau et son enrobage permet le passage d'ions du noyau, vers le zinc, qui se trouve ainsi lui aussi protégé et plus largement disponible pour la protection dite cathodique du métal à protéger.

On donne ci-après quelques exemples de réalisation de l'invention.

Selon un premier exemple de mise en oeuvre de l'invention, on utilise comme métal anodique le zinc, et comme matériau de substitution du fer sous la forme de phosphures de fer.

Il est possible d'utiliser d'autres métaux anodiques, pourvu qu'ils soient plus anodiques que le métal à protéger, et d'autres matériaux de substitution pourvus qu'ils soient conducteurs et qu'ils se comportent de façon cathodique par rapport au métal anodique choisi.

La formation de noyaux de phosphure de fer enrobés de zinc peut être realisée de plusieurs manières.

Un premier mode de mise en oeuvre consiste à mélanger de la poudre de zine et de la poudre de phosphure de fer, puis à soumettre ce mélange a un broyage mécanique.

Par exemple, la taille, avant mélange et broyage simultanés, des particules de zinc est comprise entre un et plusieurs centaines de μm, tandis que celle des particules de matériau de substitution (phosphure de fer) est comprise entre 1 et 200 μm.

Le broyage mécanique peut être effectué dans un récipient contenant une pluralité de billes d'acier, et soumis à des microvibrations de grande période et de courte amplitude.

Du fait que le phosphure de fer possède une dureté mécanique supérieure à celle du zinc, les particules de ce dernier sont brisées et écrasées contre les particules de phosphure de fer plus dur; il se forme ainsi un dépôt par écrasement des particules de zinc réduites à une granulométrie fine et fixées par écrasement mécanique à la surface des particules de fer; on obtient ainsi un enrobage de zinc autour des noyaux constitués des particules de phosphure de fer.

Avantageusement, les particules de phosphure de fer ont une taille initiale sensiblement équivalente ou légèrement inférieure à l'épaisseur de la couche de revêtement anticorrosion que l'on veut appliquer sur le métal à protéger. En effet, lors du broyage avec enrobage simultanés, la taille des particules de phosphure de fer ne diminue que faiblement et on obtient ainsi une composition constituée de noyaux de phosphure de fer enrobés de zinc, susceptibles de constituer, notamment par incorporation dans une quantité de liants adéquats, un produit facile à étaler et appliquer selon une épaisseur donnée sur le métal à protéger.

Cette épaisseur est de l'ordre de 10 à 50 μm par exemple.

En outre, la quantité de liant dans laquelle est incorporée la composition pigmentaire, est déterminée de façon que, une fois reportée sur la surface à protéger, les particules formées de noyaux enrobés soient en contact électrique les uns avec les autres.

Sans entrer dans une description des phénomènes apparaissant au niveau de chaque noyau enrobé, il peut être intéressant de proposer une interprétation du fonctionnement sur le plan électronique, de la protection cathodique anticorrosion réalisée par la composition selon l'invention.

Lorsque la composition pigmentaire est rapportée sur le métal à protéger, le zinc est au contact de ce dernier et assure la protection cathodique par le fait que le zinc joue le rôle d'anode soluble par rapport à l'acier.

En outre et concomitamment, le noyau de phosphure de fer joue le rôle de cathode par rapport au zinc, ce qui permet au zinc d'être lui-même protégé électriquement et d'être ainsi plus largement disponible pour la protection cathodique de l'acier.

Le noyau de phosphure de fer au sein de chaque particule enrobée, constitue ainsi une source d'électrons qui peuvent traverser la barrière de diffusion située dans la zone de contact entre le noyau de phosphure de fer et l'enrobage périphérique de zinc, dans le sens noyau-enrobage.

De même entre l'enrobage de zinc et l'acier, il existe un courant d'électrons, et l'enrobage de zinc constitue à son tour par rapport à l'acier une source d'électrons.

Afin de faciliter la diffusion dans la zone de jonction entre le noyau et l'enrobage, il est avantageux d'utiliser des matériaux pour le noyau et l'enrobage de densité comparable.

On obtient ainsi, pour chaque particule constituée de noyaux enrobés, au contact de l'acier, ce que l'on pourrait appeler un "site cathodique alterné" du fait de l'alternance vue dans l'espace du rôle joué par les constituants en présence, à savoir: le noyau, l'enrobage et le métal à protéger.

Ainsi, la composition selon l'invention va à l'encontre du principe généralement admis qui veut que la

3

protection cathodique anticorrosion d'un revêtement soit proportionnelle à la quantité de métal anodique.

En effet, dans la composition selon l'invention, la quantité relative de zinc pour chaque particule est extrêmement faible puisque celui-ci ne constitue qu'une couche extérieure superficielle enrobant chaque noyau.

Par exemple, la demanderesse à réalisé une composition selon l'invention avec les proportions suivantes en poids:

- poudre de zinc 20 %
- phosphure de fer 80 %

La taille initiale des particules de chacun des constituants est la suivante pour cet exemple:

- poudre de zinc 25 μm
- phosphure de fer 6 μm

Le mélange est introduit dans un récipient vibrant contenant des billes d'acier de 5 à 20 cm de diamètre et soumis à vibrations pendant 120 minutes.

Il est ajouté à la composition ainsi réalisée après broyage et enrobage simultanés, un liant tel qu'une résine ester epoxy représentant 6,5 % en poids de la composition.

La composition ainsi réalisée est projetée sur une plaque d'acier, dont une partie est laissée nue; ladite plaque est ensuite soumise à un essai dit de "brouillard salin" suivant les normes usuelles pendant 15 jours.

On constate à la fin de la période d'essai, l'apparition de rouille sur la partie de la plaque d'acier laissée nue, tandis que la partie revêtue de la composition selon l'invention est exempte de rouille, et même de sel de zinc dénommé rouille blanche.

Des essais prolongés et comparatifs montrent qu'un simple mélange de particules de zinc et de fer (sous forme de phosphure) dans un rapport $\frac{Zn}{Fe} = \frac{20}{80}$ n'apporte, qu'une protection médiocre et très insuffisante, alors que les particules enrobées selon la technique de l'invention, tout en utilisant le même rapport pondéral $\frac{Zn}{Fe}$, constituent une protection efficace et d'une durée d'efficacité, plus que doublée.

Cet enrobage de zinc de chaque noyau de phosphure de fer est susceptible d'être réalisé par d'autres méthodes que le broyage mécanique, en l'occurrence par électro-deposition chimique. A cette fin, on prépare un bain d'une solution contenant un sel de zinc (sulfate de zinc), du phosphure de fer en suspension associé à un agent mouillant, et un acide réducteur.

Ainsi, il se produit sur chaque noyau de phosphure de fer un dépôt de zinc en couches très minces et de façon uniforme sur chaque noyau.

En outre, il est possible d'utiliser d'autres matériaux de substitution que le phosphure de fer, pourvu qu'ils répondent aux conditions énoncées précédemment.

En théorie, tout composé comportant un élément métallique est susceptible d'être employé. On préférera utiliser des sels de métal pour des raisons de commodité de réalisation et de coût, et du fait que parmi ces derniers, il est plus facile de trouver un matériau de substitution répondant à des conditions supplémentaires avantageuses, telle que la disponibilité à bas prix de revient.

Afin de permettre d'effectuer des travaux de soudure sur le métal à protéger revêtu de la composition selon l'invention, le matériau de substitution formant le noyau de chaque particule sera choisi comme présentant un point de fusion sensiblement du même ordre que celui du métal à protéger, en l'occurrence de l'acier.

Parmi les sels de métal susceptibles d'être employés, on peut citer les carbures, phosphures, nitrures, borures, siliciures, d'un métal tel que le fer, le cobalt, le nickel, le molybdène, le titane, le chrome, le zirconium, le vanadium, le tungstène, le thorium, le tantale et le cadmium.

Le terme phosphure de fer employé jusqu'ici couvre évidemment le phosphure de fer Fe P et le di-phosphure de fer $Fe_2$ P, et/ou le mélange de ces deux corps.

On peut également utiliser du phosphure de nickel, du di-phosphure de nickel, du tri-phosphure de nickel, ou le mélange de ces derniers comme matériau de substitution.

En vue de réduire l'agressivité de l'environnement vis-à-vis de l'enrobage de zinc sur le noyau, la composition selon l'invention peut comporter des inhibiteurs anticorrosion tels que des chromates, phosphates, plombates, silico-plombates, molybdates, tungstates, et autres substances contenant de l'oxygène aussi bien de type oxydant, que non oxydant.

Il est également possible d'incorporer à la composition pigmentaire des particules d'autres matériaux métalliques tels que le manganèse, le chrome, l'aluminium et des alliages de ces derniers, dans un rapport compris en poids entre 0,01 % et 25 % de la composition totale.

**Revendications**

1. Composition pigmentaire pulvérulente destinée à la protection cathodique de surface métallique contre la corrosion, et susceptible d'être appliquée sur ladite surface notamment après incorporation dans un liant, ladite composition étant à base d'une part d'un métal plus anodique que le métal à protéger, tel que le zinc, et, d'autre part d'un matériau de substitution,

caractérisée en ce qu'elle est constituée de particules formées d'un noyau dudit matériau de substitution choisi parmi les composés conducteurs électriquement tels que les carbures, phosphures, nitrures, borures, siliciures, d'un métal tel que le fer, cobalt, nickel, molybdène, titane, chrome, zirconium, vanadium, tungstène,

**0 170 541**

thorium, tantale, cadmium, se comportant de façon cathodique par rapport au métal anodique choisi et en ce que ce noyau est revêtu d'une couche d'enrobage constituée du métal anodique.

2. Composition pigmentaire selon la revendication 1,
caractérisée en ce que le matériau de substitution formant chaque noyau est de densité sensiblement équivalente à celle du métal anodique d'enrobage.

3. Composition pigmentaire selon l'une des revendications ou 2,
caractérisée en ce que le matériau de substitution est choisi avec un point de fusion sensiblement du même ordre que celui du métal constituant la surface à protéger.

4. Composition pigmentaire selon l'une des revendications 1, 2 ou 3 ci-dessus,
caractérisée en ce que le matériau de substitution formant le noyau des particules est du phosphure de fer et le métal anodique est du zinc.

5. Composition pigmentaire selon l'une des revendications 1, 2, 3 ou 4 ci-dessus,
caractérisée en ce qu'elle comporte également des additifs constitués de particules de métaux auxiliaires tels que le manganèse, le chrome ou l'aluminium.

6. Procédé pour la préparation d'une composition pigmentaire selon l'une des revendications 1 à 5 ci-dessus,
caractérisé en ce que l'on prépare le matériau de substitution sous forme de particules de granulométrie comprise entre et 200 µm et que l'on provoque, par tous moyens tels que broyage mécanique, revêtement chimique ou électro-déposition, le dépôt d'une couche du métal anodique sur la surface desdites particules du matériau de substitution formant ainsi les particules enrobées constituant la composition pigmentaire.

7. Procédé selon la revendication 6 ci-dessus,
caractérisé en ce que le traitement en vue du processus de revêtement du métal anodique sur les noyaux constitués par les particules du matériau de substitution est prolongé jusqu'à ce que l'on obtienne une épaisseur de l'enrobage en métal anodique permettant la création d'une zone intermédiaire de diffusion des ions entre le noyau constitué de métal de substitution et la couche extérieure d'enrobage du métal anodique.

8. Procédé selon l'une des revendications 6 ou 7 ci-dessus, caractérisé en ce que l'on mélange des particules de matériau de substitution d'une part et des particules de métal anodique d'autre part, la dureté du matériau de substitution étant supérieure à celle du métal anodique puis l'on soumet le mélange à un broyage mécanique de manière à réaliser un dépôt d'une couche du métal anodique à la surface des particules du matériau de substitution.

9. Procédé selon la revendication 8 ci-dessus,
caractérisé en ce que la quantité en poids de métal anodique par rapport au mélange total est comprise entre 3 et 90 % et de préférence entre 10 et 30 %.

10. Produit à l'état liquide ou pâteux et destiné à constituer un revêtement de protection contre la corrosion, caractérisé en ce qu'il comporte dans un liant une composition pigmentaire selon l'une des revendications 1 à 5 ci-dessus introduite dans une proportion comprise entre 10 et 95 % du liant (indépendamment de la présence de diluants volatiles éventuels), et adjonction de particules de matériaux inhibiteurs de corrosion tels que chromates, phosphates, molybdates, tungstates.

**Claims**

1. Pulverulent pigmentary composition intended for the cathodic protection of a metallic surface against corrosion, and capable of being applied to said surface, particularly after incorporation in a binding agent, said composition being based, on the one hand, on a metal more anodic than the metal to be protected, such as zinc, and, on the other hand, on a substitute material,
characterized in that it is constituted by particles formed by a core of said substitute material selected from the electrically conductive compounds such as carbides, phosphides, nitrides, borides, silicides, of a metal such as iron, cobalt, nickel, molybdenum, titanium, chromium, zirconium, vanadium, tungsten, thorium, tantalum, cadmium, having a cathodic behaviour with respect to the selected anodic metal and in that the core is coated with a coating layer constituted by the anodic metal.

2. Pigmentary composition according to claim 1,
characterized in that the substitute material forming each core is of density substantially equivalent to that of the anodic coating metal.

3. Pigmentary composition according to one of claims 1 or 2,
characterized in that the substitute material is chosen to have a melting point substantially of the same order as that of the metal constituting the surface to be protected.

4. Pigmentary composition according to one of claims 1, 2 or 3,
characterized in that the substitute material forming the core of the particles is iron phosphide and the anodic metal is zinc.

5. Pigmentary composition according to one of claims 1, 2, 3 or 4,
characterized in that it also includes additives constituted by particles of auxiliary metals such as manganese, chromium or aluminium.

6. Process for preparing the pigmentary composition according to one of claims 1 to 5,
characterized in that it comprises the steps of preparing the substitute material in the form of particles of

5

granulometry comprised between 1 and 200 μm and provoking, by any means such as mechanical grinding, chemical coating or electro-plating, the deposit of a layer of the anodic metal on the surface of said particles of the substitute material thus forming the coated particles constituting the pigmentary composition.

7. Process according to claim 6, characterized in that the treatment for coating the anodic metal on the cores constituted by the particles of the substitute material is extended until a thickness of the coating of anodic metal allowing the creation of an intermediate zone of diffusion of the ions between the core constituted by substitute metal and the outer coating layer of the anodic metal is obtained.

8. Process according to one of claims 6 or 7, characterized in that particles of substitute material on the one hand and particles of anodic metal on the other hand are mixed, the hardness of the substitute material being greater than that of the anodic metal, then the mixture is subjected to a mechanical grinding so as to make a deposit of a layer of the anodic metal on the surface of the particles of the substitute material.

9. Process according to claim 8, characterized in that the quantity by weight of anodic metal with respect to the total mixture is included between 3 and 90 % and preferably between 10 and 30 %.

10. Product in the liquid or pasty state and intended to constitute a corrosion-protective coating, characterized in that it comprises in a binding agent the pigmentary composition according to one of claims 1 to 5 introduced in a proportion of between 10 and 95 % of the binding agent (independently of the presence of possible volatile diluents), and addition of particles of corrosion-inhibiting materials such as chromates, phosphates, molybdates, tungstates.

## Patentansprüche

1. Pulverförmige Pigmentverbindung zum kathodiscnen Schutz von metallischen Oberflächen gegen Korrosion, die auf deren Oberfläche insbesondere nach Aufnahme in einem Bindemittel aufgebracht werden kann, wobei die Verbindung auf Basis einerseits eines mehr anodischen Metalls als das zu schützende Metall wie Zink, und andererseits eines Ersatzstoffes aufgebaut ist, dadurch gekennzeichnet, daß sie aus Partikeln mit einem Kern aus dem Ersatzstoff besteht, der unter den elektrisch leitenden Verbindungen, wie Karbiden, Phosphiden, Nitriden, Boriden, Siliciden, eines Metalls, wie Eisen, Kobalt, Nickel, Molybdän, Titan, Chrom, Zirkon, Vanadium, Wolfram, Thorium, Tantal, Cadmium, das sich kathodisch gegenüber dem ausgewählten anodischen Metall verhält, ausgewählt wird, und daß der Kern mit einer Umhüllungsschicnt aus dem anodischen Metall überzogen ist.

2. Pigmentverbindung nach Anspruch 1, dadurch gekennzeichnet, daß der jeden Kern bildende Ersatzstoff eine im wesentlichen äquivalente Dichte zum anodischen Umhüllungsmetall aufweist.

3. Pigmentverbindung nach einem der Ansprüche 1 oder 2, dadurch gekennzeichnet, daß der Ersatzstoff mit einem Schmelzpunkt von im wesentlichen der gleichen Größenordnung wie dem des die zu schützende Fläche bildenden Metalls ausgewählt wird.

4. Pigmentverbindung nach einem der Ansprüche 1, 2 oder 3, dadurch gekennzeichnet, daß der den Kern bildende Ersatzstoff Eisenphosphid ist und das anodische Metall Zink ist.

5. Pigmentverbindung nach einem der Ansprüche 1, 2, 3 oder 4, dadurch gekennzeichnet, daß sie auch Additive enthält, die aus Partikeln von Hilfsmetallen, wie Mangan, Chrom oder Aluminium, aufgebaut sind.

6. Verfahren zur Gewinnung einer Pigmentverbindung nach einem der Ansprüche 1 bis 5, dadurch gekennzeichnet, daß man den Ersatzstoff in Form von Partikeln mit Korngrößen zwischen 1 und 200 μm herstellt und daß man durch Verfahren wie mechanisches Mahlen, chemisches oder galvaniscnes Überziehen die Ablagerung einer Schicht aus anodischem Metall auf der Oberfläche der Partikel aus dem Ersatzstoff herbeiführt, wodurch die die Pigmentverbindung aufbauenden, umhüllten Partikel gebildet werden.

7. Verfahren nach Anspruch 6, dadurch gekennzeichnet, daß die Behandlung im Hinblick auf den Umhüllungsvorgang mit dem anodischen Metall auf den aus den Partikeln aus Ersatzstoff gebildeten Kernen solange verlängert wird, bis man eine Dicke der Umhüllung aus anodischem Metall erhält, die die Bildung einer intermediären Diffusionszone von Ionen zwischen dem aus Ersatzstoff gebildeten Kern und der äußeren Umhüllungsschicht aus anodischem Metall erlaubt.

8. Verfahren nach einem der Ansprüche 6 oder 7, dadurch gekennzeichnet, daß man einerseits Partikel aus Ersatzstoff und andererseits Partikel aus anodischem Metall mischt, wobei die Festigkeit des Ersatzstoffs größer ist als die des anodischen Metalls, und daß man dann die Mischung einem mechanischen Mahlvorgang unterwirft, sodaß die Ablagerung einer Schicht aus anodischem Metall auf der Oberfläche der Partikel aus dem Ersatzstoff erzielt wird.

9. Verfahren nach Anspruch 8, dadurch gekennzeichnet, daß der Gewichtsanteil von anodischem Metall an der Gesamtmischung zwischen 3 und 90 % und vorzugsweise zwischen 10 und 30 % liegt.

10. Produkt im flüssigen oder pastösen Zustand, vorgesehen zum Aufbau einer Schutzumhüllung gegen Korrosion,

dadurch gekennzeichnet, daß es in einem Bindemittel eine Pigmentverbindung nach einem der Ansprüche 1 bis 5 in einem Anteil zwischen 10 und 95 % des Bindemittels (ohne Berücksichtigung des Vorhandenseins eventueller flüchtiger Verdünnungsmittel) sowie Zusätze von korrosionshemmenden Stoffen, wie Chromate, Phosphate, Molybdate, Wolframate, enthält.